# EUROPÄISCHE PATENTANMELDUNG

(11) **EP 0 530 581 A1**
(43) Veröffentlichungstag der Anmeldung: **10.03.1993**
(21) Anmeldenummer: 92114026.5
(22) Anmeldetag: 18.08.1992
(51) Int. Cl.: F24D 3/12, F24D 19/10, G05D 23/19

(54) **Thermo-Controller zur Inbetriebnahme einer Fussbodenheizung**

(30) Priorität: 20.08.1991 DE 4127493
(71) Anmelder: Krumm, Norbert, D-63695 Glauburg (DE)
(72) Erfinder: Krumm, Norbert, D-63695 Glauburg (DE)
(74) Vertreter: Müller-Wolff, Thomas Dipl.-Ing.

(57) **Zusammenfassung**

Die Erfindung "Thermo-Controller" betrifft ein Verfahren und eine Vorrichtung zur Durchführung eines automatischen Steuersystems zum Ausheizen von Fußbodenheizestrichen, so daß keine Schäden an Bodenbelegen oder Verwölbungen in den Estrichflächen auftreten. Eine gegen Manipulationen in einem Aluminiumkoffer geschützte und eingebaute Regel- und Meßelektronik wird dabei anstelle der Standardregelung an die Heizungsanlage angebracht, wobei über die Differenz aus dem Sollwert der Auf- und Abheizkurve und dem jeweiligen Istwert der Vorlauftemperatur ein elektronischer Regler (Mikroprozessor) über eine Regelung der Umwälzpumpe und des Mischermotors den Vorlauftemperatur-Istwert derart steuert, daß der gesamte Vorgang des Auf- und Abheizens vorschriftsmäßig durchlaufen und mit einem Drucker zeitlich dokumentiert wird. Es ist insofern möglich, die Restausgleichsfeuchte bei Zement- und Anhydridestrichen vorschriftsmäßig durch ein automatisches Steuersystem zu begrenzen, wobei insbesondere eine optimale Beweissicherheit durch ein erstelltes Protokoll über den gesamten Ablauf gegeben ist.

## Beschreibung

Die vorliegende Erfindung bezieht sich auf eine elektronische Kontroll- und Steuereinheit zur Steuerung des Auf- und Abheizens eines Heizfeldes, wobei mit diesem insbesondere das Ausheizen von Fußbodenheizestrichen möglich sein soll. Desweiteren bezieht sich die Erfindung auf ein Verfahren zur Ausheizung von Fußbodenheizestrichen vor dem Verlegen des Oberbodens unter Verwendung einer derartigen elektronischen Kontroll- und Steuereinheit.

Das Ausheizen von Heizfeldern, insbesondere von Fußbodenheizestrichen ist aus den verschiedensten Gründen erwünscht. Bei Fußbodenheizestrichen müssen diese vor Aufbringung der Bodenbeläge "ausgeheizt" werden. In Folge aufgetretener Schäden an beheizten Fußbodenkonstruktionen sind unterschiedliche Richtlinien und auch eine Fußbodenheizungsnorm DIN 4725 über die Art der Auf- und Abheizung beheizter Fußbodenkonstruktionen erlassen worden. Es gilt dabei insbesondere die Auf- und Abheizung derart vorzunehmen, daß die im Estrich vorhandene Ausgleichsfeuchte beim Einbau der Bodenbeläge im wesentlichen abgebaut ist. Insofern sollen Schäden an Bodenbelägen und Verwölbungen von Estrichflächen weitgehendst vermieden werden. Gemäß DIN 4725 Teil 4 wird der Vorgang des Auf- und Abheizens genau vorgeschrieben, wobei ferner eine prozentuale Begrenzung der Ausgleichsfeuchte bei Zement- und Anhydridestrichen vorgegeben ist. Danach müssen alle Estriche vor dem Verlegen von Oberbodenbelägen aufgeheizt werden. Das Aufheizen soll bei Zementestrichen frühestens nach 21 Tagen und bei Anhydridestrichen nach Angabe des Herstellers frühestens nach 7 Tagen erfolgen. Das erste Aufheizen beginnt mit einer Vorlauftemperatur von 15° K über Raumtemperatur, mindestens jedoch bei 20° c. Eine weitere Erhöhung der Vorlauftemperatur um 15° K kann nach drei Tagen erfolgen. Die maximale Vorlauftemperatur darf frühestens nach sieben Tagen eingestellt werden. Diese Vorlauftemperatur muß solange aufrecht erhalten bleiben, bis die Ausgleichsfeuchten nach Tabelle 1 der DIN 4725 Teil 4 erreicht sind.

Zur Messung der Ausgleichsfeuchten sind in der Heizfläche geeignete Stellen auszuweisen. Es ist eine Meßstelle je 100 m² mindestens jedoch eine Meßstelle je Wohnung vorzusehen. Die Angabe "zulässiger Ausgleichsfeuchten" erfolgt dabei insofern, als nicht immer sichergestellt ist, daß trotz Einhaltung des Ausheizvorganges der Grenzwert für die Ausgleichsfeuchte erreicht wird.

In welchem Umfang durch den Ausheizprozeß die Feuchtigkeit "herunter getrieben" werden kann, hängt nicht allein vom Feuchtegehalt, sondern vielmehr von der Art des Estrichs, von seinen Bestandteilen, von den Umgebungstemperaturen bis zum Beginn der Ausheizung und der Höhenlage der Heizrohre im Estrich ab.

Wird nach dem 1. Ausheizvorgang die in der vorgenannten Tabelle angegebene Ausgleichsfeuchte nicht erreicht, so ist unter Umständen ein 2. Ausheizvorgang erforderlich. Die Aushärtezeit der ersten 21 Tage, welche verstreichen muß, bevor das Auf- und Abheizen des Fußbodenheizestriches vorgenommen wird, soll dabei in der Regel gewährleisten, daß eine Mindesthärtezeit erreicht wird, wobei zu beachten ist, daß bei geringen Raumtemperaturen eine längere Aushärtezeit anzusetzen ist. Insofern spielen niedrigere oder höhere Umgebungstemperaturen eine wichtige Rolle, wobei eine frühere oder spätere Reife des Estriches erzielt wird. Bei Anhydridestrichen kann je nach Herstellerangaben, in der Regel nach 7 - 10 Tagen, mit der Aufheizung begonnen werden. Dabei ist zu beachten, daß eingeschlossene Feuchtigkeit beim Anhydridestrich schlechter entweichen kann als bei Zementestrichen. Deshalb ist zu empfehlen, den Ausheizvorgang bei Anhydridestrichen entsprechend zu strecken.

Die Zeit zwischen Ausheizung und Belagsarbeiten sollten dabei möglichst gering sein. Dies da bei größerem Zeitverzug zwischen Ausheizung und Belagsarbeiten ein nochmaliges Nachmessen der Restfeuchte notwendig sein kann.

Gemäß den Richtlinien des Zentralverbandes des Deutschen Baugewerbes aus dem Jahre 1981 soll ein Ausheizen der Fußbodenheizestriche dadurch erfolgen, daß eine tägliche Steigerung der Vorlauftemperatur der Fußbodenheizung um 5° C vorgenommen wird. Ein automatisches Einstellen dieser täglichen Temperaturerhöhungen bis zur maximalen Ausheiztemperatur und ein entsprechendes Absenken der Vorlauftemperatur um einen bestimmten von der Estrichart und weiteren Parametern vorgegebenen Festwert durch bloßes Addieren mit dem zur Heizkurve bzw. zum Raumtemperatur-Sollwert der Flächen- bzw. Fußbodenheizungsanlage ist dabei insofern problematisch, als dies nicht durch die Verwendung eines einfachen Einstellers automatisch erfolgen kann. Es bedarf vielmehr eines automatischen Steuersystems zum Ausheizen der Fußbodenheizestriche, wobei eine Kontrolle zwischen der Vorlauf-Solltemperatur und der Vorlauf-Isttemperatur stattfinden muß. Dies gilt insbesondere, sofern ein Mischer der Heizungsanlage in Verbindung mit einer witterungsgeführten Regelanlage während des Auf- und Abheizens verwendet wird. Sofern nämlich bei einer derartigen Anlage zwar ein Abschalten der Nachtabsenkung und eine Einregelung der Heizkurve entsprechend der Vorlauf-Solltemperatur erfolgt, so kann nicht ohne weiteres einer Änderung der Außentemperatur zwischen Tag und Nacht um 10° C entsprochen werden. Dies da dann über die Regelanlage und den Mischer die Vorlauftemperatur automatisch verändert wird, und die gewünschte Vorlauftemperatur zur Ausheizung somit nicht mehr eingehalten ist.

Wird die Vorlauftemperatur manuell durch Handverstellung am Mischer auf den geforderten Wert gebracht, so wird sich durch die langsame Aufheizung der Estrichfläche und die damit verbundene Anhebung der Rücklauftemperatur das Beimischverhältnis ändern und zu einer neuen, erhöhten Vorlauftemperatur führen.

Um nunmehr in einfacher Weise automatisch die Aussteuerung von Flächenheizungen, insbesondere Fußbodenheizestrichen vornehmen zu können, wobei insbesondere nicht ständig manuell die Vorlauftemperaturen zu kontrollieren und gegenzusteuern sind, und eine Veränderung der Außentemperatur nicht mehr auf die eingestellte Vorlauftemperatur Einfluß nimmt,
betrifft die Erfindung eine Vorrichtung und ein Verfahren zur Automatisierung des Auf- und Abheizvorganges zur Ausheizung von Heizestrichen und dergleichen. Aufgabe der Erfindung ist dabei die Schaffung einer elektronischen Kontroll- und Steuereinheit, die unter zusätzlichem Anschluß eines Druckers in nachweisbarer, protokollierbarer Weise das Auf- und Abheizen von Fußbodenheizestrichen und die spätere Inbetriebnahme der Heizungsanlage durch geeignete Steuerung und Kontrolle der Vorlauftemperatur der Heizungsanlage erlaubt,
wobei eine zeitliche Erhöhung der Vorlauf- und damit der Ausheiztemperaturen in Temperaturintervallen auf eine bestimmte, vorgegebene Ausheiztemperatur, von z.B. 45° C, und eine Aufrechterhaltung dieser maximalen Vorlauftemperatur über einen bestimmten Zeitintervall, z.B. bis zur Erreichung einer bestimmten, vorgegebenen Soll-Ausgleichsfeuchte und/oder ein anschließendes Abheizen möglich sein soll. In vorteilhafter Ausführung soll dabei insbesondere eine Regelung in Abhängigkeit von der gemessenen momentanen Ausgleichsfeuchte möglich sein. Insofern muß dann ein Übergang auf eine andere vorgegebene Auf- und Abheizkurve erfolgen.

Prinzipiell kann dabei auch ohne eine automatische Steuerung in Abhängigkeit von der manuell gemessenen Restfeuchte und einer insofern festgestellten Abweichung von der gemäß DIN 4725 zu erreichenden Ausgleichsfeuchte für unterschiedliche Bodenbeläge und unterschiedliche Estricharten eine Wiederholung des gesamten Steuerungsprozesses erfolgen.

Zur Lösung dieser Aufgabe ist die Ausbildung einer elektronischen Kontroll- und Steuereinheit zur Steuerung des Auf- und Abheizens eines Heizfeldes gemäß Patentanspruch 1 vorgesehen.

Diese elektronische Kontroll- und Steuereinheit wird dabei vorzugsweise derart verwendet, daß bei einer witterungsabhängigen Regelanlage der Heizung der Außenfühler vorübergehend abgeklemmt und stattdessen ein Festwiderstand, der z.B. dem Wert des Außenfühlers bei ca. 10° C Außentemperatur entspricht, angeklemmt wird. Insofern können Veränderungen der Außentemperatur von vorne herein nicht mehr die eingestellte Vorlauftemperatur beeinflussen. Vorzugsweise wird dabei die Heizkesselanlage während des Auf- und Abheizens auf Konstantbetrieb, z.B. 70° C eingestellt.

Die Kontroll- und Steuereinheit weist dabei eine Regelelektronik auf, welche den gesamten Vorgang des AufAbheizens vorschriftsmäßig steuert und dabei die erreichten Vorlauf-Isttemperaturen zeitlich dokumentiert. In bovorzugter Ausführungsform weist die Kontroll- und Steuereinheit dabei zur Protokollierung des gesamten Ablaufes einen eingebauten Drucker auf. Über einen Temperaturanlegefühler wird dabei die Vorlauf-Isttemperatur erfaßt, wobei über einen elektronischen Regler und einen Vorlauftemperatur-Sollwertgeber und einen Vorlauftemperatur-Istwertgeber, welche die Temeraturwerte jeweils durch eine elektrisch Spannung darstellen, eine Stellgröße derart gebildet wird, daß diese die Regelabweichung zwischen Vorlauftemperatur-Sollwert und Vorlauftemperatur-Istwert erfaßt. Aufgrund dieser Stellgröße wird im Regelkreis der Vorlauftemperatur-Istwert (Regelgröße) derart beeinflußt, daß die Regelabweichung (zeitlicher Vorlauftemperatur-Sollwertverlauf abzüglich Regelgröße) möglichst klein wird. Die auf der Regelstrecke (Heizungskreislauf) einwirkenden Störungen(Störgröße Z) werden dabei durch die Stellgröße überlagert. Es erfolgt insofern eine elektrische Steuerung der Größe der Vorlauftemperatur durch eine Regelung der Umwälzpumpe und des Mischermotors.

Insbesondere ist dabei möglichst die Vorlauftemperatur somit beginnend bei 20° C, täglich um 5° K anzuheben und dabei über 24 h konstant zu halten, wobei diese Steuerung genau kontrolliert und geregelt über die Regelelektronik erfolgt. Nach Erreichen der ausgelegten, maximalen Vorlauftemperatur und z.B. einer Durchheizzeit von 72 h senkt dabei die Regelelektronik der Kontroll- und Steuereinheit z.B. in einem 24-Stunden-Zyklus die Vorlauftemperatur um jeweils 10° K ab. Der eingebaute Drucker protokolliert dabei den gesamten Ablauf. Über einen Sicherheitstemperaturbegrenzer mit Pumpenimpulsschaltung ist dabei eine Überheizung ausgeschlossen und somit ein optimaler Schutz gegeben. Sofern die Vorlauftemperatur die Sicherheitstemperatur von z.B. 60° C überschreitet, wird der Mischer automatisch zugefahren und die Umwälzpumpe ausgeschaltet. Es ist dabei möglich die Regelelektronik derart zu fahren, daß nach 5 Min. die Umwälzpumpe 20 sec. das Signal "ein" pulst und dann für 40 sec. das Signal "aus", bis der Sollwert laut Programmablauf wieder erreicht ist.

Prinzipiell ist es möglich den Heizkessel nicht nur im Konstantbetrieb, z.B. bei 70° C zu betreiben, sondern auch einen "gleitenden Betrieb" vorzusehen.

Dies da die Kontroll- und Steuereinheit die Speisetemperatur selbständig regelt. Es muß lediglich sichergestellt sein, daß die erforderliche Vorlauftemperatur kesselseitig zur Verfügung steht.

Zum Anschluß der elektronischen Kontroll- und Steuereinheit an die Heizungsumwälzpumpe, den Stellantrieb und/oder den Mischermotor der Mischerbatterie der Heizungsanlage und den Übertemperatur- bzw. Vorlauftemperatur-Istwert-Fühler muß jeweils der dort vorhandene Anschluß der Standardregelung unterbrochen werden, wobei insofern die Heizungsanlage frei zu schalten ist und der Netzstecker gezogen wird. So dann muß der Anschluß der Heizungs-Umwälzpumpe an das entsprechende Kabel der Kontroll- und Steuereinheit erfolgen, sowie ebenfalls der Anschluß des Mischermotors bzw. des Stellantriebs an die dort jeweils vorhandenen Anschlußkabel für "Mischer zu" und "Mischer auf", wobei ein zusätzlicher Anschluß an den Nulleiter notwendig ist. Die Montage des Vorlauf- und Sicherheitsfühlers, welcher vorzugsweise fest an der Kontroll- und Steuereinheit mit seinem Widerstandsfühler angeschlossen ist, erfolgt ca. 30 cm hinter der Umwälzpumpe für den Fußboden-Heizkreis. Der Wärmeübergang muß dabei gut leitend (an einer metallischen Rohrstrecke) sein. Da die Regelelektronik in Form einer elektronischen Regelschaltung sowohl eine Betriebsspannung bzw. ein Stellsignal "Mischer **öffnet**" als auch "Mischer **schließt**" sowie ein elektrisches Betriebssignal für die Umwälzpumpe der Heizunsanlage ausgibt, kann eine stufenweise Verstellung des Mischers über einen Schrittmotor erfolgen, wobei dieser derart antreibbar ist, daß der Mischer geöffnet und geschlossen wird. Es ist insofern entsprechend dem in einem Programmspeicher eingegebenen zeitlichen Verlauf der Vorlauftemperatur-Sollwerte möglich, entsprechend den zeitlichen Ausheiztemperatursteuerungskurven für das Auf- und Abheizen von Zement- und Anhydridfußbodenheizestrichen und unterschiedlichen Bodenbelägen die Vorlauftemperatur-Istwerte auszusteuern und somit den gesamten Vorgang des Auf- und Abheizens vorschriftsmäßig vorzunehmen und dabei über einen z.B. an der Schnittstelle der Regelschaltung zur Ausgabe und/oder Eingabe der momentanen Vorlauftemperatur-Istwerte angeschlossenen Drucker zu dokumentieren.

Vorzugsweise wird dabei als Regelschaltung ein Mikroprozessor mit Datenspeicher verwendet. Der Mikroprozessor übernimmt dabei als Regelschaltung alle Regel- und Steuerfunktionen.

Die Betätigung der Kontroll- und Steuereinheit erfolgt dabei über eine äußere, über einen Deckel bzw. einer entsprechenden Sicherung abschließbare Bedieneroberfläche, so daß eine Manipulation der Kontroll- und Steuereinheit verhindert ist. An dieser Bedienerfläche sind dabei vorzugsweise sämtliche Aufzeichen- und Anzeigeräte für die momentane Vorlauftemperatur und den zeitlichen Ablauf der sich daraus ergebenden Auf- und Abheizkurve vorgesehen. Gemäß Anspruch 7 erfolgt dabei eine optische Anzeige der gemessenen Teile der Auf- und Abheizkurve über eine Anzeigetafel bei Übereinstimmung mit der durch Leuchtanzeigen dargestellten Auf- und Abheizkurve der Vorlauftemperatur-Sollwerte, wobei bei Übereinstimmung der Temperaturwerte jeweils die Leuchtanzeigen aufleuchten. Insofern ist ein zeitlicher Verlauf der Vorlauftemperatur-Sollwerte in Belag- und Estricharten auf der Bedieneroberfläche skaliert. Vorzugsweise erfolgt dabei unmittelbar über dieses Skalierung der einzelnen Auf- und Abheizkurven die manuelle oder automatische Einspeicherung auf die Speicherchips des Programmspeichers.

Gemäß Anspruch 8 erfolgt dabei die Erfassung der momentanen Ausgleichsfeuchten über mehrere Meßfühler im Estrich, welche dort eingetaucht sind, wobei die Kontroll- und Steuereinheit einen Istwertgeber für den Meßwert der erreichten momentanen Ausgleichsfeuchte und einen Sollwertgeber zur Eingabe der zu erreichenden Ausgleichsfeuchte aufweist und einen entsprechenden Datenspeicher für die gemäß DIN 4725 Teil 4 z.B. zulässigen Restausgleichsfeuchten in Abhängigkeit von Bodenbelag und Estrichart, wobei die Meßwerte und Sollwerte der Ausgleichsfeuchten jeweils in elektrischen Spannungen dargestellt sind. Insofern ist es möglich in einem einzigen gesamten Steuerungsprozeß unmittelbar die Auf- und Abheizkurve zu durchlaufen, wobei automatisch die zulässige Rest-Ausgleichsfeuchte erreicht oder unterschritten wird.

Insofern kann die elektronische Kontroll- und Steuereinheit auch vollautomatisch ohne bloße manuelle Messung der Restfeuchte und bei Abweichungen gegebenenfalls ohne vorzunehmende Wiederholung des gesamten Steuerungsprozesses betrieben werden.

Gemäß Anspruch 9 ist es dabei auch möglich über eine Auswahlschaltung der Kontroll- und Steuereinheit das Aufheizen bis zum Erreichen einer bestimmten Soll-Ausgleichsfeuchte bei einer bestimmten maximalen Ausheiztemperatur vorzunehmen.

Die Erfindung wird im folgenden anhand einer bevorzugten Ausführungsform unter Bezug auf deren beigefügte Zeichnung näher erläutert.

Es zeigen:

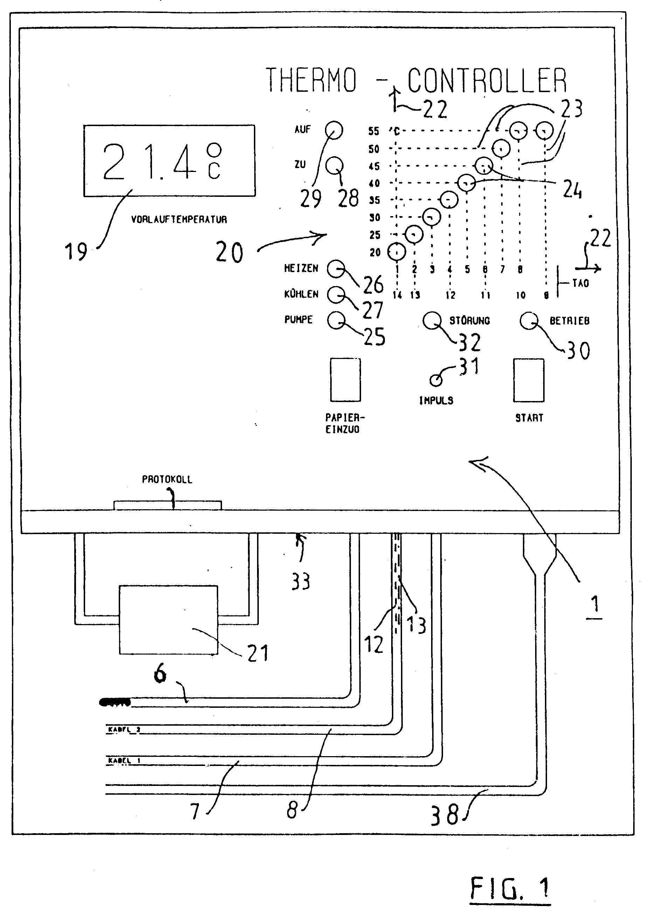

- Figur 1:: die Darstellung der Bedieneroberfläche der elektronischen Kontroll- und Steuereinheit mit den verschiedensten dort angeordneten Aufzeichen- und Anzeigegeräten und der Skalierung einer Auf- und Abheizkurve und einem Thermodrucker sowie der seitlichen Anschlußleitungen für die Umwälzpumpe, den Mischerschrittmotor bzw. dessen Stellantrieb, den Vorlauf- und Sicherheitstemperaturfühler und den Netzanschluß;

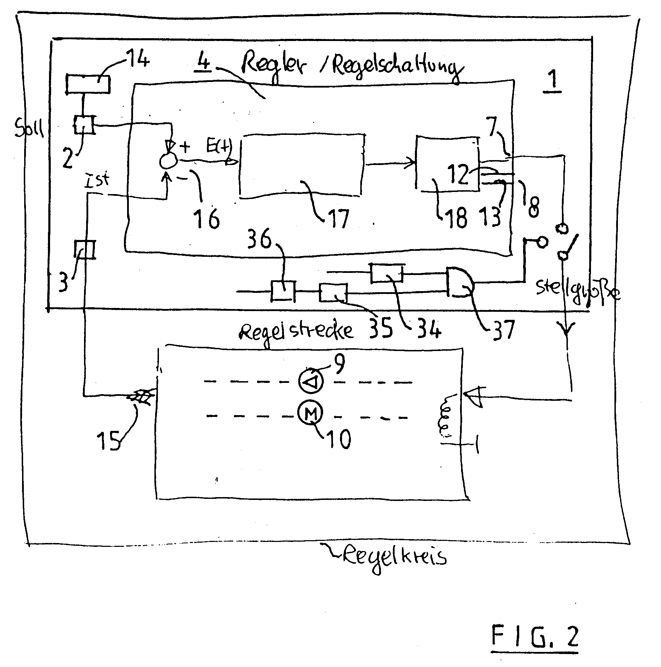

- Figur 2:: in schematischer Darstellung den Regelkreis, welcher aus der elektronischen Kontroll- und Steuereinheit mit fest an diesem angeschlossenen Vorlauf- und Sicherheitstemperaturfühler und der Regelstrecke in Form der bezüglich seiner Vorlauftemperatur veränderbaren Heizungsanlage mit Umwälzpumpe und Mischerschrittmotor besteht;

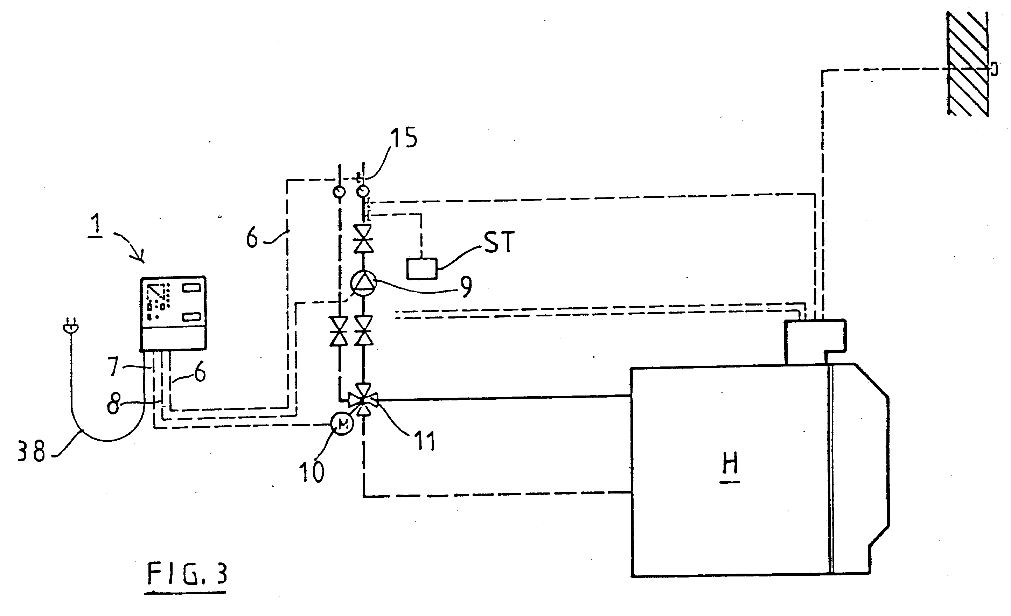

- Figur 3:: die Schaltung der elektronischen Kontroll- und Steuereinheit an einer Heizungsanlage zum Auf- und Abheizen von Fußbodenheizestrichen, wobei die Heizungsanlage von der Standardregelung freigeschaltet ist und zur Regelung der Temperatursteuerung mit der Kontroll- und Steuereinheit diesejeweils statt der Standardregelung angeschlossen ist. Es erfolgt insofern ein Auf- und Abheizen ohne die durch die Standardregelung vorgegebene Heizkurve bzw. ohne Außentemperatur- und Raumtemperatursteuerung;

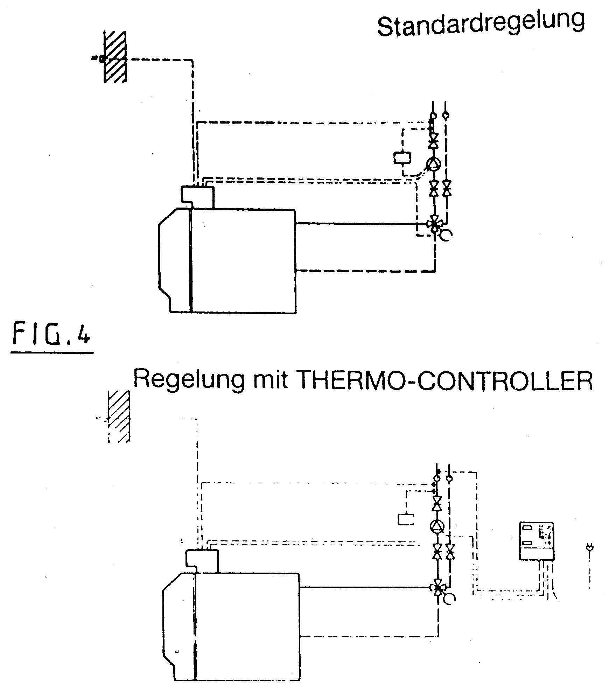

- Figur 4:: eine Gegenüberstellung der Standardregelung und der Regelung mit der erfindungsgemäßen elektronischen Kontroll- und Steuereinheit;

In Figur 1 erkennt man die Bedieneroberfläche der elektronischen Kontroll- und Steuereinheit (1), welche in einem abschließbarem Aluminiumkoffer eingebaut ist und an die Heizungsanlage mit den Kabeln (7, 8) für den Anschluß der Ausgangsschnittstellen zur elektronischen Steuerung der Umwälzpumpe der Heizungsanlage sowie des Schrittmotors und den Kabeln (15 und 38) für den Anschluß des Vorlauf- und Sicherheitstemperaturfühlers und den Netzanschluß installiert werden kann.

Die Anordnung der Kontroll- und Steuereinheit (1) in einem kofferartigen Behälter (33) aus Aluminium, welcher mit einem Deckel über der Bedieneroberfläche abschließbar ist, dient dabei zur Sicherung der Kontroll- und Steuereinheit um eine Manipulation an dieser zu verhindern. Insbesondere über den eingebauten Drucker (21), wobei seitlich über einen Einzugsschlitz ein Protokollstreifen eingeführt wird, ist dabei eine genaue Protollierung des zeitlichen Verlaufs der Vorlauftemperatur-Istwerte der Heizungsanlage gegeben. Es ergibt sich somit ein Beleg für das Auf- und Abheizen der Fußbodenheizestriche, wobei gleichzeitig zusätzlich die jeweilige Restfeuchte des Fußbodenestriches vermerkt werden kann. Es ist dabei in einer abgewandelten in Figur 2 angedeuteten Ausführungsform auch vorgesehen, die Ausgleichsfeuchte im Estrich unmittelbar über mehrere dort eingetauchte Meßfühler zu erfassen und auf dem Protokollstreifen zum Ausdruck zu bringen. In der vorliegenden Ausführungsform wird die Restfeuchte lediglich manuell gemessen und bei Abweichungen gegebenenfalls der gesamte Steuerungsprozeß wiederholt. Der an dem seitlichen Einzugsschlitz eingeführte Protokollstreifen läuft dabei durch Betätigen der Taste "Papiereinzug" automatisch durch den Drucker und erscheint an der seitlichen oberen Austrittsöffnung in der Bedieneröffnung (Protokoll).

Zur Kontrolle der Funktionen der Kontroll- und Steuereinheit (1) sind dabei auf der Bedieneroberfläche neben dem Aufzeichengerät in Form des. Druckers (21) verschiedene optische Anzeigen angeordnet. Im linken oberen Teil erkennt man dabei die Anzeige eines digitalen Thermometers (19), wobei rechts davon eine Anzeigetafel (20) mit einem Koordinatensystem (22) und einem dort eingezeichneten Sollwertdiagramm des zeitlichen Verlaufs der Heizungs-Vorlauftemperatur (23) dargestellt ist. Dieses Sollwertdiagramm (23) der Auf- und Abheizkurve wird dabei durch einzelne Leuchtanzeigen (24) dargestellt, welche insofern einzelnen Kurvenpunkten der Auf- und Abheizkurve entsprechen.

Man erkennt dabei daß die Aufheizung des Estriches in einem Bereich zwischen 20 und 55° C erfolgt, wobei die gesamte Auf- und Abheizung sich über einen Zeitraum von 14 Tagen erstreckt.

Neben dieser Skalierung der Auf- und Abheizkurve ist gleichzeitig eine Darstellung der Vorlauftemperatur-Istwerte möglich, sofern diese mit den Vorlauftemperatur-Sollwerten übereinstimmen. Insofern erfolgt in einem derartigen Fall ein Aufleuchten der Kurvenpunkte bzw. Leuchtanzeigen (24) des Sollwertdiagramms (23).

Es ist insofern unverzüglich zu erkennen, ob die Regelelektronik der Kontroll- und Steuereinheit (1) den gesamten Vorgang des Auf- und Abheizens vorschriftsmäßig steuert, oder ob eine unzulässige Abweichung von dem vorgegebenen Verlauf des Auf- und Abheizvorganges gegeben ist.

Neben dem Sollwertdiagramm (23) der Auf- und Abheizkurve ist ferner
eine Anzeige (25) für den Betrieb der Umwälzpumpe,
eine Anzeige (26) für das Durchlaufen der Aufheizkurve,
eine Anzeige (27) für das Durchlaufen der Abheizkurve,
eine Anzeige (28, 29) für das Stellsignal "Mischer **schließt**" und "Mischer **öffnet**" und eine Anzeige (30, 31) für den Anschluß und Betrieb der Kontroll- und Steuereinheit (1)
gegeben. Die Anzeige (31) dient dabei insbesondere zur Darstellung des Betriebs nach Ausschaltung der Kontroll- und Steuereinheit aufgrund einer erreichten Übertemperatur. Insofern erfolgt ein gepulster Betrieb der Heizungs-Umwälzpumpe über z.B. 20 sec. und ein anschließender Stillstand über z.B. 40 sec., bis der Sollwert laut Programmablauf wieder erreicht ist.

Über die Anzeige (32) wird eine Störfunktion der Steuerung, etwa aufgrund eines Defektes des Vorlauf- und Sicherheitstemperaturfühlers (15) erfaßt.

Über diesen Vorlauf- und Sicherheitstemperaturfühler (15), welcher fest an der Kontroll- und Steuereinheit (1) angeschlossen ist und etwa in 30 cm Entfernung hinter der Heizungs-Umwälzpumpe für den Fußbodenheizkreis angebracht werden muß, ist es dabei möglich die Heizungs-Umwälzpumpe und den Mischermotor (Schrittmotor) zu regeln, wobei in der in Figur 2 dargestellten Regelelektronik der Kontroll- und Steuereinheit (1) eine Stellgröße in Form einer Regelabweichung zwischen dem momentanen Vorlauftemperatur-Istwert und dem vorgegebenen Vorlauftemperatur-Sollwert gebildet wird.

Die Vorlauftemperatur wird so, beginnend bei 20° C, täglich um 5° K angehoben und über 24 h konstant gehalten. Nach Erreichen der ausgelegten, maximalen Vorlauftemperatur (55° C) und 72 h Durchheizzeit senkt die Regelelektronik der Kontroll- und Steuereinheit (1) aufgrund des in einem Programmspeicher (14) vorgegebenen zeitlichen Verlaufs der Auf- und Abheizkurve (siehe Figur 2) in 24-Stunden-Zyklus die Vorlauftemperatur um jeweils 10° K ab. Der eingebaute Drucker (21) protokolliert dabei den gesamten zeitlichen Verlauf der Vorlauftemperatur-Istwerte.

Beim Anschluß der Kontroll- und Steuereinheit (1) ist sicherzustellen, daß die Heizungsanlage freigeschaltet und deren Netzstecker gezogen ist. Insofern wird der Heizkessel "konstant" betrieben, wobei sichergestellt sein muß, daß die erforderliche Größe der Vorlauftemperatur kesselseitig zur Verfügung steht. Prinzipiell ist es natürlich auch möglich den Heizkessel "gleitend" zu betreiben. Über die Kontroll- und Steuereinheit erfolgt dabei unmittelbar der Anschluß der in Figur 2 - 4 dargestellten Heizungs-Umwälzpumpe (9) und der Anschluß und die Steuerung des Schrittmotors (10) bzw. des Mischermotors, welcher zur Kontrolle des Stellantriebes der 3-Wege-Mischerbatterie (11) der Heizungsanlage dient.

Die Umwälzpumpe (9) wird dabei über das Kabel der Ausgangsschnittstelle (7) angeschlossen, welches jeweils einen Leiter, einen Nulleiter und eine weitere Ader für Impulsbetrieb aufweist.

Der Anschluß des Mischermotors (10) gemäß Figur 2 - 4 erfolgt dabei über das Kabel der Ausgangsschnittstelle (8), wobei dieses zwei Leiter (Ader für Mischer "zu" und Ader für Mischer "auf"), einen Nulleiter und eine Ader für Impulsbetrieb aufweist.

Die Signalausgänge "Mischer **öffnet**" und "Mischer "**schließt**" sind dabei jeweils mit den Bezugsziffern (12, 13) an dem entsprechenden Kabel dargestellt.

Die Montage des Thermowiderstandes des Vorlauf- und Sicherheitstemperaturfühlers (15), welcher über das Kabel der Schnittstelle (6) angeschlossen wird, und dabei in der Kontroll- und Steuereinheit (1) zu dem Vorlauftemperatur-Istwertgeber (3) führt, muß dabei hinter der Umwälzpumpe (9), also im Vorlauf der Heizungsanlage unter Sicherstellung eines gut leitenden Wärmeüberganges an der dortigen metallischen Rohrstrecke mit einer Bandschelle befestigt werden. Mit dem Einstecken des Netzsteckers (Kabel 38) ist dann das Gerät betriebsbereit. Es muß darauf geachtet werden, daß während des Auf- und Abheizens keine Unterbrechung der Stromzufuhr auftritt.

Nach dieser Installation und dem Einzug des Protokollstreifens folgt dann die Inbetriebnahme der Kontroll- und Steuereinheit (1). Dazu wird die in Figur 1 dargestellte Starttaste gedrückt und somit der Auf- und Abheizvorgang ausgelöst. Die Umwälzpumpe (9) läuft an und das Mischerventil (11) fährt zu. Insofern erhöht sich der Vorlauftemperatur-Istwert der Heizungsanlage. Nach 5 Min. öffnet der Mischer (11) und regelt die Vorlauftemperatur auf einen Soll-Wert von 20° c ein. Das eingebaute Digitalthermometer (19) zeigt dabei den jeweiligen Istwert an (Genauigkeit plus/minus 1° C). Die eingebaute Regelelektronik in Form der in Figur 2 dargestellten elektronischen Regelschaltung (4) übernimmt dabei alle Regel- und Steuerfunktionen.

Der Drucker (21) in Form eines Thermodrucker protokolliert dabei den gesamten zeitlichen Auf- und Abheizvorgang und zeigt eventuelle Fehlfunktionen wie Netzausfall und Fühlerdefekt an. Insofern erfolgt bei einem Netzausfall der Ausdruck "N", wobei dieser Defekt durch eine als Zusatz erhältliche und nachrüstbare Batterie behoben werden kann, wobei insofern über die Batterie die Versorgung der Regelelektronik und der Antrieb der Umwälzpumpe und des Mischermotors erfolgt. Bei einem Fühlerdefekt erfolgt dabei der Ausdruck "F", wobei der Ausdruck der Kontroll- und Steuereinheit (1) und die weitere Temperaturregelung gestoppt wird, bis der Fühler erneuert ist.

Die elektronische Regelschaltung (4) gemäß Figur 2 weist dabei desweiteren einen Sicherheitstemperaturbegrenzer mit Pumpenimpulsschaltung auf. Bei Übertemperatur, also bei Überschreiten einer Vorlauftemperatur von z.B. 60° C wird der Mischer (11) automatisch zugefahren, und die Umwälzpumpe (9) ausgeschaltet. Nach 5 Min. pulst die Umwälzpumpe 20 sek. "ein" und anschließend für 40 sek. "aus", bis der Sollwert laut Programmablauf wieder erreicht ist.

Durch diese automatischen Fehlermeldungen und den Sicherheitstemperaturbegrenzer mit Pumpenimpulsschaltung wird dabei eine hohe Sicherheit beim Ausheizen des Estriches auch bei konstant betriebener Heizungsanlagen bei höheren Temperaturen von z.B. 70° C erreicht. Die elektronische Regelschaltung (4) kann dabei über einen Mikropozessor mit Datenspeicher und Programmspeicher (14) auf digitalem Wege realisiert werden. Es ist dabei auch möglich, die Regelschaltung (4) gemäß Figur 2 mittels analoger elektronischer Bauteile aufzubauen, wobei ein Differenzbildner (16), ein Servoverstärker (17) und ein Operationsverstärker (Endstufe) (18) verwendet wird. Über einen Vorlauftemperatur-Sollwertgeber (2) und einen Vorlauftemperatur-Istwertgeber (3), bei welchen die Temperaturweite jeweils durch eine elektrische Spannung dargestellt werden, erfolgt dabei jeweils über die Schnittstellen (5, 6) der elektronischen Kontroll- und Steuereinheit (1) die Eingabe dieser Ist- und Sollwerte. Der Vorlauftemperatur-Sollwertgeber (2) ist dabei mit einem Programmspeicher (14) verbunden, in welchem jeweils die verschiedenen zeitlichen Temperatursteuerungskurven für das Auf- und Abheizen von Zement- und Anhydridfußbodenheizestrichen und für unterschiedliche vorzusehene Bodenbeläge abgespeichert sind, wobei diese unterschiedlichen Auf- und Abheizkurven jeweils einzeln zur Sollwertsteuerung abrufbar sind.

Die Regelschaltung (4) weist dabei seitlich rechts die beiden Ausgangsschnittstellen (7, 8) auf, über welche die Umwälzpumpe (9) bzw. der Mischermotor (10) angeschlossen wird. Es sind dabei bei dem Kabel der Schnittstelle (8) die Adern (12 und 13) für die Steuerung "Mischer zu" und "Mischer auf" dargestellt.

Sofern die Restfeuchte nicht manuell zu messen und insofern nichtbei Abweichungen der gesamte Steuerprozeß zu wiederholen ist, ist gemäß Figur 2 eine weitere Automatisierung der Steuerung insofern vorgesehen, als ein Anschluß mehrerer Meßfühler erfolgt, welche im Estrich eingetaucht sind und die dortige jeweilige Ausgleichsfeuchte messen. Insofern ist ein Ist-Wertgeber (34) für den Meßwert der erreichten Ausgleichsfeuchte und ein Soll-Wertgeber (35) zur Eingabe der zu erreichenden Ausgleichsfeuchte vorgesehen, sowie ferner ein Datenspeicher und eine Wahlschaltung (36) zur Einstellung und Speicherung des Wertes der zu erreichenden Ausgleichsfeuchte für unterschiedliche Arten des Aufbaus der Zement- und Anhydridestriche und unterschiedliche Bodenbelege, sowie ein Komparator (37) mit einem Ein/Ausschalter für die Regelschaltung (4).

In Figur 2 ist dabei der gesamte Regelkreis zur Steuerung des gesamten Vorganges des Auf- und Abheizens dargestellt, welcher aus dem Datenspeicher (14), dem Vorlauftemperatur-Sollwertgeber (2), dem Vorlauftemperatur-Istwertgeber (3), den Eingangsschnittstellen (5, 6), den Ausgangsschnittstellen (7, 8), der zusätzlichen Eingabe und Steuerung der Regelschaltung über die gemessene momentane Ausgleichsfeuchte (34, 35, 36, 37) und der Heizungsanlage mit der Umwälzpumpe (9) und dem Mischermotor (10) sowie dem Vorlauf- und Sicherheitstemperaturfühler (15) besteht. Die elektronische Kontroll- und Steuereinheit (1) weist dabei zusätzlich noch den in Figur 1 dar,gestellten Drucker (21) auf, welcher vorzugsweise über die Schnittstolle (6) für die Eingabe des Vorlauftemperatur-Istwertes angeschlossen wird und zusätzlich einen Zeitgeber zur Protokollierung des zeitlichen Auf- und Abheizverlaufes aufweist.

Wie sich aus dem Schaltplan zum elektrischen Anschluß der Kontroll- und Steuereinheit (1) ergibt, ist dies unter minimalen Installationsaufwand möglich. Es ist dazu lediglich eine Freischaltung der Heizungsanlage von der Außentemperatur- und Raumtemperatursteuerung (ST) und von dem Anschluß dieser Steuerung und des Heizkessels an dem Vorlauftemperaturfühler (15) notwendig, wobei gleichzeitig die Stromversorgung der Umwälzpumpe (9) und des Mischermotors (10) über diese Steuerung bzw. den Heizkessel (H) zu unterbrechen ist.

Es bedarf insofern lediglich der Herstellung des Netzanschlusses (38) der Kontroll- und Steuereinheit (1) sowie des Anschlusses der Umwälzpumpe (9) und des Mischermotors (10) an die Ausgangsschnittstellen (7, 8) über die entsprechenden dortigen Kabel, wobei ferner der Thermowiderstand (15) des Vorlauf- und Sicherheitstemperaturfühlers über ein Kabel an die Eingangsschnittstelle (6) für die Messung der momentanen Vorlauftemperatur bzw. den Vorlauftemperatur-Istwertgeber (3) zu legen ist. Dieser Unterschied zwischen der Standardregelung und der Regelung mittels der erfindungsgemäßen elektronischen Kontroll- und Steuereinheit (1) ist dabei unmittelbar unter Gegenüberstellung der entsprechenden Schaltpläne in Figur 4 dargestellt.

Die elektronische Kontroll- und Steuereinheit erlaubt somit
- eine maximale Sicherheit beim Ausheizen des Estriches,
- einen minimalen Zeit- und Kostenaufwand für den Heizungsbauer,
- einen optimalen Bedienungskomfort durch die verwendet Regelelektronik zur Steuerung des gesamten Vorganges des Auf- und Abheizens,
- einen minimalen Installationsaufwand und
- eine optimale Beweissicherheit durch Protokollierung des gesamten zeitlichen Auf- und Abheizvorganges mit Fehlermeldung, wobei zusätzlich ein Sicherheitstemperaturbegrenzer mit Pumpenimpulsschaltung als optimaler Schutz vorgesehen ist.

### Bezugsziffernliste

- 1: Kontroll- und Steuereinheit
- 2: Vorlauftemperatur-Sollwertgeber
- 3: Vorlauftemperatur-Istwertgeber
- 4: Regelschaltung
- 5, 6: Schnittstellen für die Eingabe der momentanen Vorlauftemperatur-Istwerte bzw. der Vorlauftemperatur-Sollwerte
- 7, 8: Ausgangsschnittstellen zum Anschluß der Umwälzpumpe bzw. des Mischermotors (Schrittmotor)
- 9: Umwälzpumpe
- 10: Mischermotor (Schrittmotor)
- 11: Mischerbatterie
- 12: Signalausgang "Mischer **öffnet**"
- 13: Signalausgang "Mischer **schließt**"
- 14: Programmspeicher
- 15: Vorlauf- und Sicherheitstemperaturfühler (Thermowiderstand)
- 16: Differenzbildner
- 17: Servo-Verstärker
- 18: Endstufe
(16, 17 und 18 Bilden die Regelschaltung (4))
- 19, 20, 21: Aufzeichen- und Anzeigegeräte
- 19: davon Digitalthermometer
- 20: Anzeigefeld
- 21: Thermodruckereinheit
- 22: Koordinatensystem zur Skalierung des zeitlichen Verlaufs der Soll- bzw. Ist-Werte der Auf- und Abheizkurve
- 23: Sollwertdiagramm der Auf- und Abheizkurve
- 24: Leuchtanzeigen (für Kurvenpunkte davon)
- 25: optische Anzeige (Umwälzpumpe)
- 26: optische Anzeige für Durchlaufen der Aufheizkurve
- 27: optische Anzeige für Durchlaufen der Abheizkurve
- 28: optische Anzeige des Stellsignals "Mischer **öffnet**"
- 29: optische Anzeige des Stellsignals "Mischer **schließt**"
- 30, 31: optische Anzeige für den Anschluß und Betrieb sowie der Übertemperatursteuerung der Kontroll- und Steuereinheit (1)
- 32: optische Anzeige Störung der Steuerung, Abweichung vom Ist-Wertverlauf
- 33: kofferartiger Behälter aus Aluminium
- 34: Ist-Wertgeber des Meßwertes der erreichten momentanen Ausgleichsfeuchte
- 35: Soll-Wertgeber zur Eingabe der zu erreichenden Ausgleichsfeuchte
- 36: Datenspeicher und Wahlschaltung zur Einstellung und Speicherung des Weites der zu erreichenden Ausgleichsfeuchte
- 37: Komparator
- 38: Netzanschluß der Kontroll- und Steuereinheit

## Patentansprüche

1. Elektronische Kontroll- und Steuereinheit zur Steuerung des Auf- und Abheizens eines Heizfeldes,
**dadurch gekennzeichnet**, daß zur Begrenzung der Ausgleichsfeuchte bei Zement- und Anhydridfußbodenheizestrichen die Kontroll- und Steuereinheit (1)
einen Vorlauftemperatur-Sollwertgeber (2) und einen Vorlauftemperatur-Istwertgeber (3), bei welchen diese Temperaturwerte jeweils durch eine elektrische Spannung dargestellt werden, und eine elektronische Regelschaltung (4) aufweist,
in welcher ein Vergleich des momentanen Ist-Wertes mit dem Soll-Wert der Vorlauftemperatur der Heizungsanlage erfolgt,
und daß die Regelschaltung (4) Schnittstellen (5, 6) zur Ausgabe und/oder Eingabe der momentanen Vorlauftemperatur-Istwerte und der Vorlauftemperatur-Sollwerte besitzt, sowie Ausgangsschnittstellen (7, 8) zur elektrischen Steuerung der Umwälzpumpe (9) der Heizungsanlage, sowie zur Steuerung eines Schrittmotors (10) zur Kontrolle eines Stellantriebes und/oder des Mischermotors einer Zwei- oder Drei-Wege-Mischerbatterie (11) der Heizungsanlage,
wobei sowohl ein Signalausgang (12) für die Betriebsspannung bzw. das Stellsignal "Mischer **öffnet**" als auch ein Signalausgang (13) für die Betriebsspannung oder das Stellsignal "Mischer **schließt**" gegeben ist, und wobei desweiteren der Sollwertgeber (2) einen Programmspeicher (14)aufweist, aus welchem jeweils die verschiedenen zeitlichen Temperatursteuerungskurven für das Auf- und Abheizen von Zement- und Anhydridfußbodenheizestrichen abgespeichert und zur Sollwertsteuerung abrufbar sind.

2. Elektronische Kontroll- und Steuereinheit nach Anspruch 1,
**dadurch gekennzeichnet**, daß diese zur Realisierung der Regelschaltung (4) auf digitalem Weg einen Mikroprozessor mit Datenspeicher oder einen Mikrokontroller aufweist.

3. Elektronische Kontroll- und Steuereinheit nach Anspruch 1,
**dadurch gekennzeichnet**, daß die Regelschaltung (4) mittels analoger elektronischer Bauteile realisiert ist, z.B. unter Bildung eines Operationsverstärkers.

4. Elektronische Kontroll- und Steuereinheit nach einem der Ansprüche 1 - 3,
**dadurch gekennzeichnet**, daß zur Feststellung der momentanen Vorlauftemperatur-Istwerte diese einen Vorlauf- und Sicherheitstemperaturfühler (Thermowiderstand) (15) aufweist.

5. Elektronische Kontroll- und Steuereinheit nach einem der Ansprüche 1 - 5,
**dadurch gekennzeichnet**, daß die Regelschaltung (4) aus einem Differenzbildner (16), einem Servo-Verstärker (17) und einer Endstufe (18) besteht.

6. Elektronische Kontroll- und Steuereinheit nach einem der Ansprüche 1 - 5,
**dadurch gekennzeichnet**, daß sie Aufzeichen- und Anzeigegeräte (19, 20, 21) für die momentane Vorlauftemperatur und den zeitlichen Ablauf der sich daraus ergebenden Auf- und Abheizkurve des Fußbodenheizestriches aufweist.

7. Elektronische Kontroll- und Steuereinheit nach Anspruch 6,
**dadurch gekennzeichnet**, daß sie zur optischen Anzeige der gemessenen Teile der Auf- und Abheizkurve eine Anzeigetafel (20) mit einem Koordinatensystem (22) des zeitlichen Verlaufes der Soll-Werte und der Ist-Werte der Auf- und Abheizkurve aufweist, wobei in das aufgedruckte Sollwertdiagramm (23) der Auf- und Abheizkurve, deren Kurvenpunkte durch Leuchtanzeigen (24) wiedergegeben sind, und die Anzeige der Ist-Werte der Auf- und Abheizkurve bei Übereinstimmung mit den Soll-Werten durch Aufleuchten der die Kurvenpunkte des Sollwertdiagramms (23) darstellenden einzelnen Leuchtanzeigen erfolgt.

8. Elektronische Kontroll- und Steuereinheit nach einem der Ansprüche 1 - 7,
**dadurch gekennzeichnet**, daß diese desweiteren einen Ist-Wertgeber (34) für den Meßwert der erreichten Ausgleichsfeuchte und einen Soll-Wertgeber (35) zur Eingabe der zu erreichenden Ausgleichsfeuchte aufweist, mit einem Datenspeicher und einer Wahlschaltung (36) zur Einstellung und Speicherung des Wertes der zu erreichenden Ausgleichsfeuchte für unterschiedliche Arten des Aufbaus der Zement- und Anhydridestriche und unterschiedliche Bodenbeläge, sowie einen Komparator (37) mit einem Ein-/Ausschalter für die Regelschaltung (4).

9. Elektronische Kontroll- und Steuereinheit nach einem der Ansprüche 1 - 8,
**dadurch gekennzeichnet**, daß der Programmspeicher (14) Temperatursteuerungskurven für das Auf- und Abheizen oder der Komparator (37) eine zusätzliche Steuereinheit mit Auswahlschaltung aufweist, bei welchen bis zum Erreichen einer bestimmten Soll-Ausgleichsfeuchte jeweils eine bestimmtemaximale Ausheiztemperatur vorgebbar ist.

10. Elektronische Kontroll- und Steuereinheit nach einem der Ansprüche 1 - 9,
**dadurch gekennzeichnet**, daß jeweils die Kontroll- und Steuereinheit (1) eine äußere optische Anzeige (25) für den Betrieb der Umwälzpumpe,
eine Anzeige (26) für das Durchlaufen der Aufheizkurve,
eine Anzeige (27) für das Durchlaufen der Abheizkurve, eine Anzeige (28, 29) für das Stellsignal "Mischer schließt" und "Mischer öffnet",
eine Anzeige (30, 31) für den Anschluß und Betrieb der Kontroll- und Steuereinheit,
sowie eine Anzeige (32) für eine Störung dieser Steuerung und für Abweichungen des Ist-Verlaufes von der Soll-Wertkurve jeweils aufweist,
wobei diese Anzeigen ihr Betriebssignal von den Schnittstellen des Mikroprozessorsystems oder des Mikrokontrollers erhalten.

11. Elektronische Kontroll- und Steuereinheit nach einem der Ansprüche 1 - 9,
**dadurch gekennzeichnet**, daß sie eine Druckereinheit (21) und einen Zeitgeber zur Protokollierung des zeitlichen Auf- und Abheizverlaufes aufweist.

12. Elektronische Kontroll- und Steuereinheit,
**dadurch gekennzeichnet**, daß diese innerhalb eines rechteckigen kofferartigen, tragbaren Behälters (33) angeordnet ist, wobei das Display der elektronischen Kontroll- und Steuereinheit (1) mit den einzelnen optischen Anzeigen (25 - 32) und dem Diagramm (23) für die Kontrolle des zeitlichen Kurvenverlaufes ganz oder teilweise an einer Bedieneroberfläche des kofferartigen Gehäuses angeordnet ist, und wobei diese durch eine seitlich verschwenkbare Abdeckung oder eine Sicherung gegen eine Manipulation der Kontroll- und Steuereinheit (1) abdeckbar ist.

13. Elektronische Kontroll- und Steuereinheit nach Anspruch 11 oder 12,
**dadurch gekennzeichnet**, daß die Druckereinheit (21) seitlich unterhalb der Bedieneroberfläche einen Einlaß für einen Druckerstreifen aufweist.

14. Elektronische Kontroll- und Steuereinheit nach einem der Ansprüche 1 - 13,
**dadurch gekennzeichnet**, daß der zeitliche Verlauf der Vorlauftemperatur-Sollwerte für unterschiedliche Belag- und Estricharten an der Bedieneroberfläche oder dem Gerätegehäuse der Kontroll- und Steuereinheit skaliert ist und eine Eingabe zur manuellen oder automatischen Einspeicherung des jeweiligen zeitlichen Sollwertauf- und Abheizverlaufes in den Programmspeicher (14) vorgesehen ist.

15. Elektronische Kontroll- und Steuereinheit nach einem der Ansprüche 1 - 14,
**dadurch gekennzeichnet**, daß dieser einen Sicherheitstemperaturbegrenzer mit Umwälzpumpenimpulsschaltung als zusätzlichen Übertemperaturschutz aufweist, wobei insofern über eine Regelschaltung über einen bestimmten Zeitintervall die Umwälzpumpe auf die Betriebsstellung "ein" und über einen zweiten Zeitintervall auf die Betriebsstellung "aus" gepulst wird bis der Sollwert laut Programmablauf erreicht ist.

16. Elektronische Kontroll- und Steuereinheit nach einem der Ansprüche 1 - 15,
**dadurch gekennzeichnet**, daß über den Drucker (21) Fehlermeldungen ausdruckbar sind, nämlich für "Fühlerdefekt", wobei die Regelschaltung (4) stoppt bis der Vorlauf- und Sicherheitstemperaturfühler (15) erneuert ist, und "Netzausfall", wobei vorzugsweise die Stromversorgung der elektronischen Kontroll- und Steuereinheit und/oder der Umwälzpumpe und des Mischermotors über eine Batterieversorgung sicherstellbar ist.

17. Verfahren zum Auf- und Abheizen von Zement- und Anhydridfußbodenheizestrichen für unterschiedliche Bodenbeläge unter Verwendung einer Kontroll- und Steuereinheit gemäß einer der vorangehenden Ansprüche, wobei der Heizkessel "gleitend" oder "konstant" betrieben wird und eine selbständige Regelung des zeitlichen Verlaufes der Vorlauftemperatur-Istwerte entsprechend der Auf- und Abheizkurve (Vorlauftemperatur-Sollwerte) erfolgt, wobei dieser Aufheizvorgang einmal oder mehrmals wiederholt wird, bis die maximal zulässige Restfeuchte erreicht oder unterschritten wird.

18. Verfahren nach Anspruch 17,
**dadurch gekennzeichnet**, daß die jeweilige Restfeuchte manuell gemessen wird und bei Abweichungen gegebenenfalls der gesamte Steuerungsprozeß wiederholt wird.

19. Verfahren nach Anspruch 17,
**dadurch gekennzeichnet**, daß zur Erfassung der momentanen Ausgleichsfeuchte mehrere Meßfühler im Estrich eingetaucht sind und eine Steuerung der Vorlauftemperatur-Istwerte bzw. des zeitlichen Verlaufes dieser Auf- und Abheizkurve in Abhängigkeit von der momentanen gemessenen Ausgleichsfeuchte bzw. der diesbezüglich festgestellten Störgröße zum Verlauf der Sollwertaufheiz- und Abheizkurve erfolgt.

20. Verfahren nach einem der Ansprüche 17 - 19,
**dadurch gekennzeichnet**, daß während des Auf- und Abheizens der Heizkessel auf Konstantbetrieb (70° C) eingestellt ist, wobei über den Vorlauf- und Sicherheitstemperaturfühler (15) die Regelung der Umwälzpumpe des Mischermotors derart erfolgt, daß beginnend bei 20° C, die Vorlauftemperatur täglich um 5° K angehoben und über 24 h konstant gehalten wird, wobei nach erreichen der ausgelegten maximalen Vorlauftemperatur (55° C) im Zyklus von 24 h nach dreitägigem Durchheizen bei der maximalen Vorlauftemperatur die Vorlauftemperatur gegebenenfalls um 10° K täglich abgesenkt wird, bis die Starttemperatur wieder erreicht ist.
